# EUROPEAN PATENT SPECIFICATION

(11) **EP 3 159 206 B1**
(45) Date of publication and mention of the grant of the patent: **08.08.2018**
(21) Application number: 15197195.9
(22) Date of filing: 01.12.2015
(51) Int. Cl.: B60N 2/26, B60N 2/28

(54) **AN INFANT SEAT FOR MOTORCARS**
KINDERSITZ FÜR KRAFTWAGEN
SIÈGE ENFANT POUR VOITURE AUTOMOBILE

(30) Priority: 21.10.2015 ES 201531143 U
(43) Date of publication of application: 26.04.2017
(73) Proprietor: JANE, S.A., 08184 Palau Solità i Plegamans Barcelona (ES)
(72) Inventor: Jané Santamaria, Manuel, 08184 Palau Solita I Plegamans (ES)
(74) Representative: Ponti & Partners, S.L.P

(56) References cited:
- EP-A2- 2 163 423
- DE-U1-202011 002 071
- GB-A- 2 282 321

## Description

### Object of the Invention:

Infant seat for motorcars.

### Background of the Invention:

There are several types of infant seats for motorcars, which generally have safety straps for the child when it is small (generally up to the age of four or five) having basically two straps joined by a buckle to a crotch strap, the seat also has a height-adjustable headrest.

These infant seats are fitted to the rear motorcar seats, having mechanical means to secure the infant seat attached to the means provided in the motorcar, such as a lower platform with an Isofix system.

Some of these seats are prepared for use by children of different ages, for which the child straps, commonly called a five-point belt, are attached to the seat with means to adjust their length. However, when the child is older (from the age of four or five), it is necessary to replace these straps and instead use the car safety belt with the infant seat until the child is about 12 years old.

In this case, when the child is older (from the age of 4 or 5), the five-point straps fitted to the seat are a bother in the safety seat and need to be removed, as the seat belt of the car is now used to hold the older child in the infant seat. Removing the five-point belt from the seat is normally complicated, takes a long time and is difficult for the user, who is normally a person unfamiliarised with this sort of disassembly.

In order to facilitate the user's adaptation of the child seat, from the stage where it is used for young children to the phase for being used for older children, there are several antecedents where a solution has been proposed, mentioning as an example the utility model DE202011002071 and the patent GB2282321 A.

The German utility model refers to a child seat for motor vehicles which is adapted to be used for children of variable size, for which it has means for concealing the straps which fasten the child to the chair (when not used) in a recess Of the backrest of the seat, the means of which are related to the means by which the headrest is moved. Means have also been provided for concealing the crotch forming part of the belt.

The British patent has as its object a child car seat having means for concealing the child's holding straps, when they are not in use, and a cavity for housing the crotch strap. The headrest can also be moved in height.

### Summary of the Invention:

The aim of this invention is an infant seat for motorcars where the five-point straps from the child's chair may be replaced for the car's own safety belt and vice versa, so that anyone can manage to change between these two infant seat layouts without difficulty, in a totally reliable manner (i.e., fool proof), and in a totally efficient way.

To achieve these advantages, the infant seat proposed by this invention has a particular structure that enables the straps to be stored in a concealed place without affecting the comfort and safety of the infant seat, and additionally, it comprises means related to the mechanism by which the headrest of the seat is lifted as the child grows.

The essence of the present invention is defined in claim 1. The infant seat of the present invention have improvements in the cited structure, characterised in that the means related to the mechanism through which the person acts for moving the headrest comprises a locking device, and have on the front part of the seat back of the infant seat a retaining element adapted to retain the straps in the passive position, comprising the infant seat a first sliding element of the five-point belt when the child is small, and a second sliding element of the headrest when the child has grown, being these sliding elements independent between them, and being these two sliding elements guided by a vertical guide of the chassis of the infant seat.

Furthermore, it is another aspect of the invention that the mentioned locking device comprise, at least, one locking element linked to the straps retaining element, so that when the straps are placed between the retaining element and the locking element, these straps press against the locking element that acts on the movement sliding element of the headrest when the child is small and locks it, and at the same time this locking element acts to unlock the movement sliding element of the headrest when the child has grown, having the locking device two different and independent elements, one for each strap, attached to the strap retaining element.

These and other features will be best made apparent by the following detailed description whose understanding will be made easier by the accompanying 8 sheets of drawings showing a practical embodiment being cited only by way of example not limiting the scope of the present invention.

### Description of the drawings:

In the drawings:
Figure 1 shows the infant seat this invention refers to in front elevation view, prepared for very young children, i.e. with the five-point belt installed.
Figure 2 shows the infant seat of Figure 1 in perspective, but without upholstery.
Figure 3 shows a detailed front perspective view of the layout of the five-point straps in passive position, i.e., when the user conceals them to adjust the infant seat for an older child.
Figure 4 shows, in a similar view to Figure 2 in perspective, a detail of the housing for passive positioning of the crotch strap and strap buckle.
Figure 5 shows a front elevation view of the infant seat ready to the used by older children, i.e., when the five-point belt has been concealed.
Figure 6 shows a rear elevation view of the infant seat of Figure 5, displaying the two independent controls for vertical movement of the headrest in both layouts.
Figures 7a and 7b show a schematic side elevation view of the locking device of one of the two controls for moving the headrest, in passive and active positions, respectively.

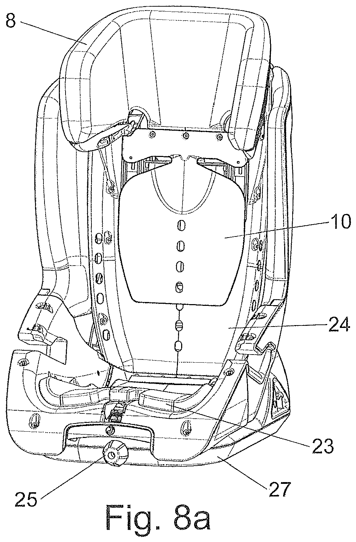

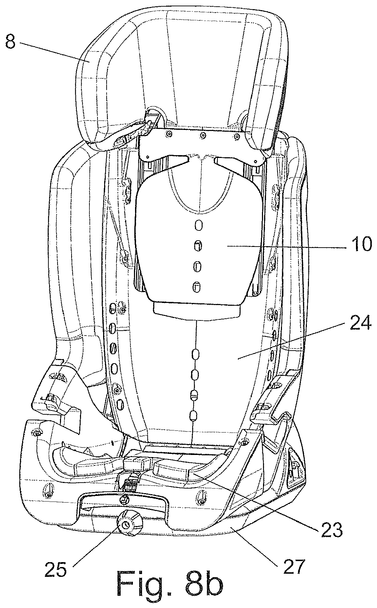

Figures 8a and 8b show a schematic frontal representation of the infant seat without upholstery in the seat configuration for older children (i.e., with the five-point belt concealed) and specifically in two different headrest height positions, that can be adjusted with the corresponding control.
Figure 9 gives an exploded view of a front perspective of the infant seat without upholstery and without the back plate, prepared for use by older children, i.e., with the five-point belt concealed.
Figure 10 gives a partial section plan view of the concealing system for the straps and the locking device for the two configurations of the infant seat, on the left, the strap is in active position, while on the right the strap is in inactive position (concealed).

### Detailed description of a preferred embodiment:

According to the drawings, the infant seat (1) for motorcars comprises a back (29) and a part of the seat (22) and, in this specific case, on a lower platform (27) that may incorporate an Isofix type system for securing to the motorcar with its corresponding adjustment control (25) to the vehicle.

Optionally the infant seat (1) may be inclined with regard to the horizontal plane of the lower platform (27) by acting on a control (28).

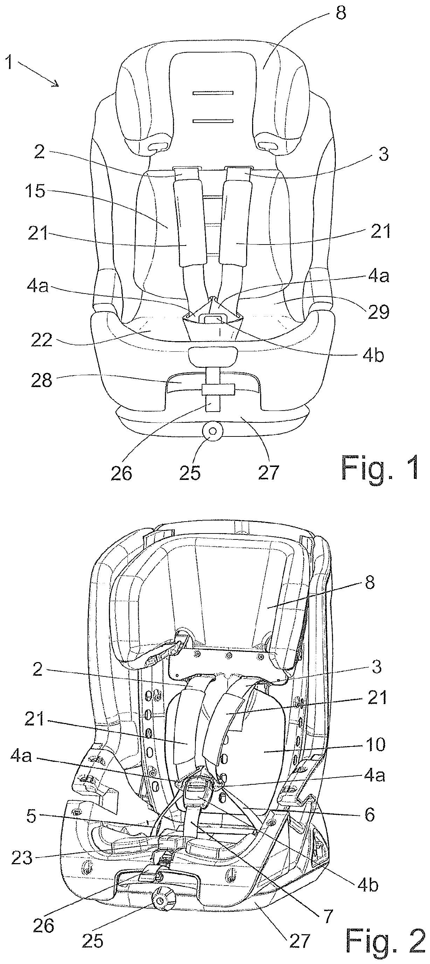

This infant seat (1) also comprises a headrest (8) that can be adjustable to different heights by acting on the corresponding control(s), see Figure 1.

The infant seat (1) comprises a five-point strap system with two vertical straps (2 and 3) passing through an upper part (4a) of a buckle and which are extended to the lower sections (5 and 6) to act like a safety belt when the child is small, a crotch strap (7) is attached to the lower part of (4b) of the buckle, see Figure 2.

These vertical straps (2 and 3) can incorporate respective protectors (21) for greater comfort of the small child, see Figure 1 or 2.

These five-point straps (2, 3, 4, 5, 6, 7) may be adjustable by means of a conventional mechanism, to adapt to the actual size of the child, pulling or releasing the front end of the belt (26) that projects from the lower part of the infant seat (1).

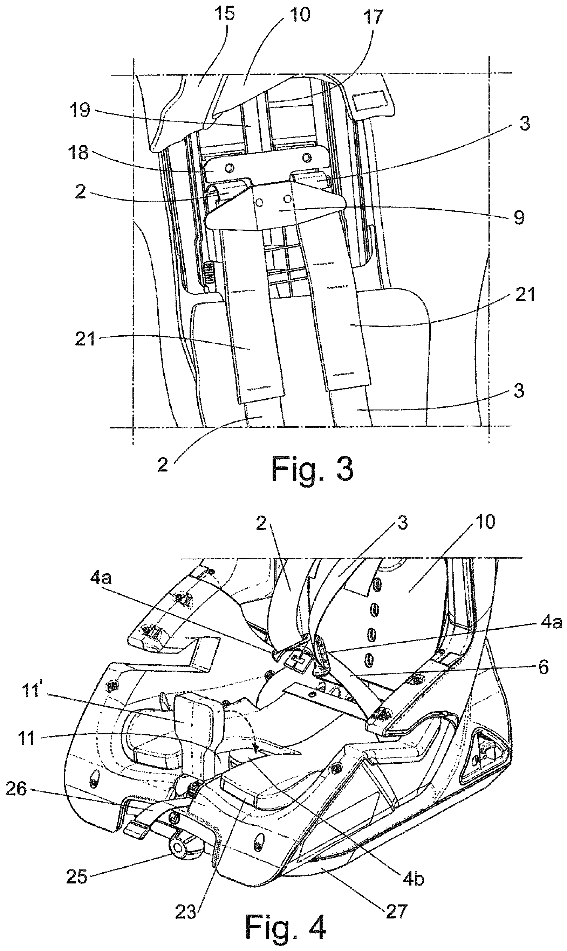

These five-point straps (2, 3, 4, 5, 6, 7) can be placed in a concealed passive position by the user, for which purpose the vertical straps (2 and 3) are placed behind a retaining element (9), at the front of the seat back (29) (see Figure 3), with a cover (10) on the front preferably flexible (see Figure 2), that conceals these straps (2 and 3) from the view of the older child.

Regarding the lower part (4b) of the buckle and the crotch strap (7), the user may also place them in a passive position, for which purpose there is a cavity (11) in the part of the seat (22) of the chair (1) where they are housed, this cavity (11) has the necessary dimensions to house the lower part (4b) of the buckle and the crotch strap (7) inside it and is closed with a cover (11') so as not to bother the older child, see Figure 4. To access this cover (11') the user must remove the upholstery covering the part the seat (22) and then get to the inside (23) of the part of the seat (22) where you can find said cavity (11).

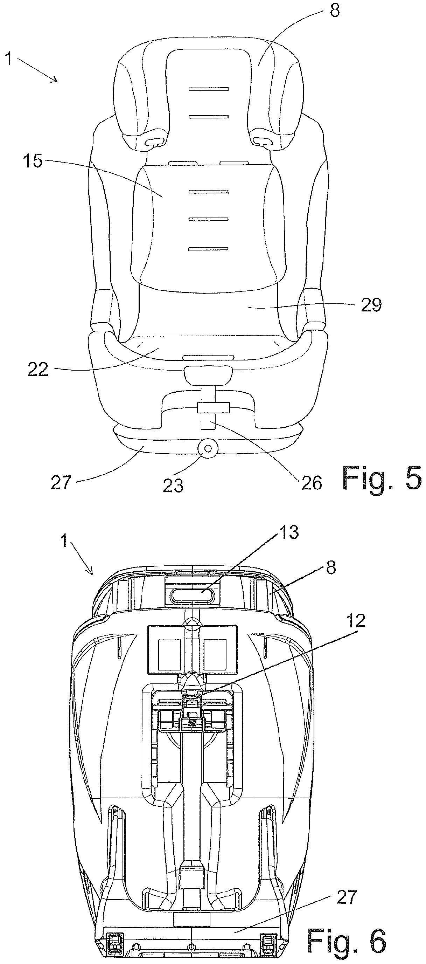

The mechanism used to move the headrest (8) comprises at least a first (12) and a second control (13), the first (12) is located at the lower part of the seat back and the second (13) in the post upper part of the headrest (8), see Figure 6. The first control (12) is used to move the headrest (8) when the infant seat is used for small children (Figure 1), while the second control (13) is used to move the headrest (8) when the infant seat is used for older children (Figure 5).

Each of these controls (12 and 13) can place the headrest (8) at different heights.

In a preferred embodiment of this invention, there is a sliding element holding the five-point belt (18) and another sliding element holding the headrest (19), these move respectively the five-point belt or the headrest vertically along the vertical axis (17) of the infant seat chassis to different heights.

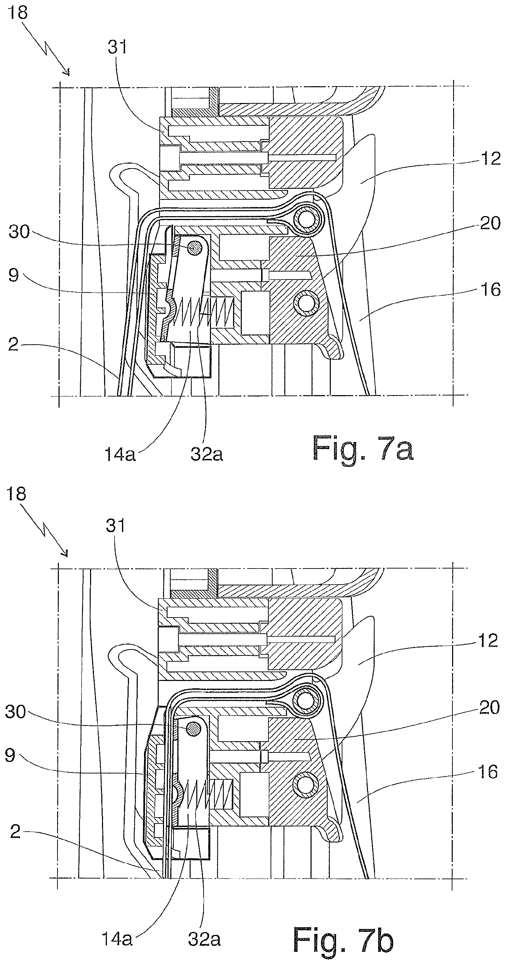

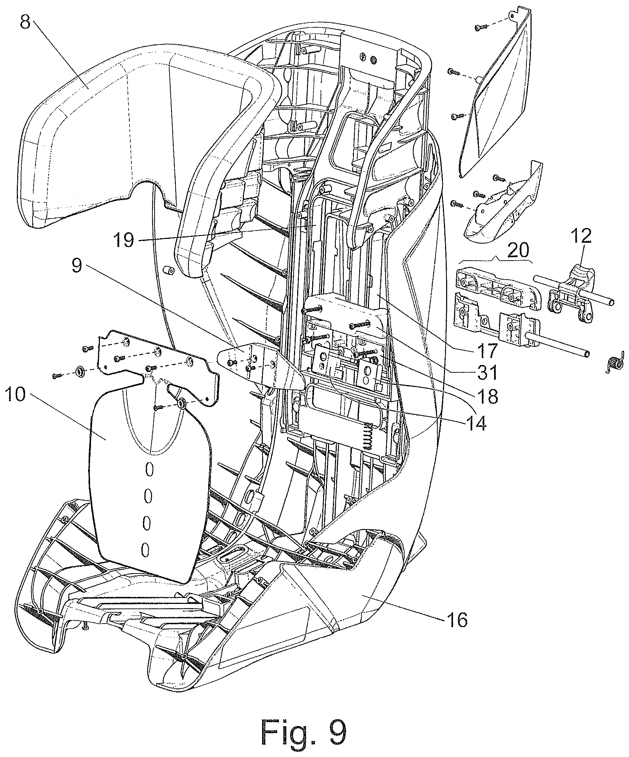

The great advantage of this mechanism is that while the first control (12) is used, the second control (13) is locked, for which purpose there is a locking device (14) in the mechanism used to move the headrest (see Figures 7a and 9), which has two different positions: the first for locking the sliding element holding the five-point belt and at the same time unlocking the sliding element holding the headrest (19), and the second position unlocking the sliding element holding the five-point belt (18) and at the same time locking the sliding element holding the headrest (19).

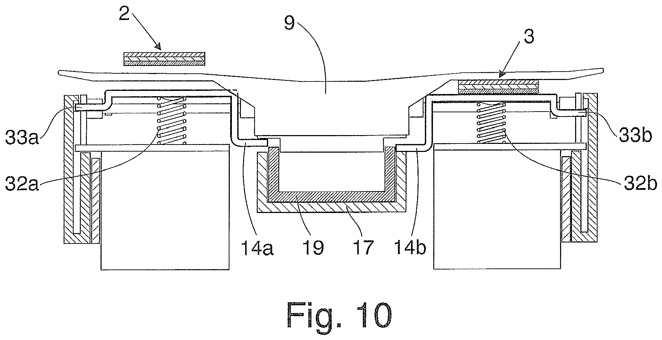

These two different positions of the locking device (14) are enabled/disabled in the following manner, see Figures 7a, 7b and 10:
- when the infant seat (1) is set up for small children (left figures 7a and 10) with the straps (2 and 3) in active position, in this case there are two locking elements (14), one for each strap, the locking elements (14) being in a first position, in which the sliding element holding the five-point belt (18) is unlocked, therefore it can move freely along the guide or vertical axis (17) of the seat, adopting different heights according to the operation of the lower control (12) .
- when the user conceals the straps (2 and 3) to occupy a passive position (right figures 7b and 10) and wishes to place the infant seat (1) in the position for older children, these locking elements (14) will then be active, locking the sliding element holding the five-point belt (18) and at the same time unlocking the sliding element holding the headrest (19). In this second position, the sliding element holding the five-point belt (18) is fixed in a certain position, while the sliding element holding the headrest (19) can move freely upwards according to different heights set by the upper control (13). In this position, the user can no longer operate the lower control (12).

Preferably, both the sliding element holding the five-point belt (18) and the one holding the headrest (19) move vertically up or down, guided by a vertical central guide (17) on the chassis (16) of the infant seat (1), see Figure 9.

According to a preferred embodiment, the sliding element holding the five-point belt (18) comprises the straps retaining element (9), the locking element/s (14), elements for securing the five-point belt (20) at the rear linked to the lower control (12) for moving the headrest when the child is small, see Figures 7a and 7b. This sliding element holding the five-point belt (18) may also comprise another additional part (31) on the upper part that is a lower stop for the movement of the sliding element holding the headrest (19).

According to a preferred embodiment, the sliding element holding the headrest (19) comprises the chassis of the headrest that comprises the upper control (13) and there are vertical guides (17) for locking/unlocking the sliding element holding the headrest (19) and to establish different heights, see Figure 9.

The locking device (14) of one of the controls for moving the headrest (8) and its operation are clearly shown in Figures 7a and 7b and also in Figure 9. In the first Figure 7a shows the straps (2 and 3) in active position, while in the next Figure 7b the straps (2 and 3) have been concealed behind the retaining element (9). In the second position (Figure 7b), as the straps (2 and 3) pass behind the retaining piece (9) they press on the locking element/s (14) that are behind the piece (9). This/these locking element/s (14) is/are responsible for locking the sliding element holding the five-point belt (18) and at the same time unlocking the upper control (13) for moving the headrest when the child is older.

As shown in these Figures 7a, 7b and 9, both locking elements (14) are linked to the retaining element (9) of the straps (2 and 3), so that as the straps (2 and 3) are between the retaining element (9) and the locking elements (14) to hide these straps (2 and 3), the straps press on the locking elements (14) that vary their position and then release the sliding element holding headrest (19) for moving vertically by means of the corresponding control (13).

According to a preferred embodiment of the locking device (14), it comprises two locking elements (14a, 14b) with their respective rocking shafts (30) (see Figure 7a), respective elastic elements, such as springs (32a, 32b), to return them to resting position, and or more tabs (33a, 33b) to carry out this locking or unlocking of the sliding element for moving the headrest (19), see Figure 9.

This locking device (14) is preferably configured by an independent part (14a, 14b) for each belt, so that if the two belts are not concealed, it will not be possible to unlock the sliding element for moving the headrest (19) when the child is older.

Figure 9 shows a possible configuration of the retaining element (9) of the straps, consisting of a body with two side wings, fitted in such a manner that between the side wings and the upper face of each locking element (14a, 14b) there is enough space to hold the straps (2, 3) inside.

The sliding element holding the five-point belt (18) when the child is small and the sliding element for moving the headrest (19) when the child has grown may vary their configuration and components without altering the essence of this invention.

The upholstery of the infant seat (1) has a skirt (15) preferably on the front of the seat back that covers the cover (10) and gives access to the rear part for concealing the straps (2, 3).

The upholstery of the infant seat (1) also comprises preferably on the seat (22) cloth or textile material (23) that covers the lower part of the seat (22) .

The invention can within the essentiality be put into practice in other embodiments only in detail differing from the one having been described above only by way of example, said other embodiments also falling within the scope of the protection being claimed.

This infant seat for motorcars may thus be manufactured in any shape and size, with the most suitable means and materials and with the most convenient accessories, and the components may be replaced by others that are technically equivalent.

## Claims

1. **AN INFANT SEAT FOR MOTORCARS** comprising a set of straps (2, 3, 4, 5, 6, 7) to restrain a child and a height-adjustable headrest (8), and has a structure which enables the straps (2, 3, 4, 5, 6, 7) to be concealed when not in use, and comprising means related to the mechanism through which the person acts for moving the headrest (8), **characterised in that** the means related to the mechanism through which the person acts for moving the headrest (8) comprises a locking device (14), and have on the front part of the seat back (24) of the infant seat (1) a retaining element (9) adapted to retain the straps (2, 3) in the passive position, **in that** the infant seat (1) further comprises a sliding element (18) for a five-point belt when the child is small, and another sliding element (19) for moving the headrest when the child has grown, these sliding elements (18, 19) being independent between them, and being these two sliding elements (18, 19) guided by a vertical guide (17) in the chassis (16) of the infant seat (1).

2. **AN INFANT SEAT FOR MOTORCARS** according to claim 1, **characterised in that** the locking device (14) has at least one locking element (14a, 14b) linked to the straps retaining element (19), so that when the straps (2, 3) are placed between the retaining element (9) and the locking element (14a, 14b), these straps (2, 3) press against the locking element (14a, 14b) that acts on the movement sliding element (19) of the headrest (8) when the child is small and locks it, and at the same time this locking element (14a, 14b) acts to unlock the movement sliding element (19) of the headrest (8) when the child has grown, having the locking device (14a, 14b) two different and independent elements (14a, 14b), one for each strap (2,3), attached to the strap retaining element (9).

3. **AN INFANT SEAT FOR MOTORCARS** according to the claim 2, **characterised in that** each locking element (14a, 14b) comprise its own tilting axis (30) so it can adopt two different positions, and its respective elastic element (32a, 32b) to return to resting position, and with one or more tabs (33a, 33b) adapted to lock or unlock the movement sliding element of the headrest (8).

4. **AN INFANT SEAT FOR MOTORCARS** according to the claim 1, **characterised in that** the vertical guide (17) is a central vertical guide (17).

## Patentansprüche

1. Ein Kindersitz für Kraftfahrzeuge, der einen Satz Gurte (2, 3, 4, 5, 6, 7), um ein Kind festzuhalten, und eine höhenverstellbare Kopfstütze (8) aufweist und eine Struktur aufweist, die ermöglicht, dass die Gurte (2, 3, 4, 5, 6, 7) verdeckt sind, wenn sie nicht in Gebrauch sind, und der eine Einrichtung aufweist, die auf den Mechanismus bezogen ist, anhand dessen die Person tätig wird, um die Kopfstütze (8) zu bewegen, **dadurch gekennzeichnet, dass** die Einrichtung, die auf den Mechanismus bezogen ist, anhand dessen die Person tätig wird, um die Kopfstütze (8) zu bewegen, eine Verriegelungsvorrichtung (14) aufweist und an dem vorderen Teil der Sitzlehne (24) des Kindersitzes (1) ein Sicherungselement (9) aufweisen, das dazu angepasst ist, die Gurte (2, 3) in der passiven Position zu sichern, dass der Kindersitz (1) ferner eine Schiebeelement (18) für einen Gurt mit fünf Ansatzpunkten, wenn das Kind klein ist, und ein anderes Schiebeelement (19) zum Bewegen der Kopfstütze, wenn das Kind größer geworden ist, aufweist, wobei diese Schiebeelemente (18, 19) voneinander unabhängig sind und diese zwei Schiebeelemente (18, 19) durch eine vertikale Führung (17) im Rahmen (16) des Kindersitzes (1) geführt werden.

2. Ein Kindersitz für Kraftfahrzeuge gemäß Anspruch 1, **dadurch gekennzeichnet, dass** die Verriegelungsvorrichtung (14) zumindest ein Verriegelungselement (14a, 14b) aufweist, das mit dem Gurtesicherungselement (19) verbunden ist, so dass dann, wenn die Gurte (2, 3) zwischen dem Sicherungselement (9) und dem Verriegelungselement (14a, 14b) platziert sind, diese Gurte (2, 3) gegen das Verriegelungselement (14a, 14b) drücken, das auf das Bewegungsschiebeelement (19) der Kopfstütze (8) einwirkt, wenn das Kind klein ist, und es verriegelt, und dieses Verriegelungselement (14a, 14b) gleichzeitig ein Entriegeln des Bewegungsschiebeelements (19) der Kopfstütze (8), wenn das Kind größer geworden ist, bewirkt, wobei die Verriegelungsvorrichtung (14a, 14b) zwei unterschiedliche und voneinander unabhängige Elemente (14a, 14b) aufweist, eines für jeden Gurt (2, 3), die an dem Gurtesicherungselement (9) befestigt sind.

3. Ein Kindersitz für Kraftfahrzeuge gemäß Anspruch 2, **dadurch gekennzeichnet, dass** jedes Verriegelungselement (14a, 14b) seine eigene Kippachse (30), so dass es zwei verschiedene Positionen einnehmen kann, und sein jeweiliges elastisches Element (32a, 32b), um in eine Ruheposition zurückzukehren, aufweist, wobei eine oder mehrere Stege (33a, 33b) dazu angepasst sind, das Bewegungsschiebeelement der Kopfstütze (8) zu verriegeln oder zu entriegeln.

4. Ein Kindersitz für Kraftfahrzeuge gemäß Anspruch 1, **dadurch gekennzeichnet, dass** die vertikale Führung (17) eine mittige vertikale Führung (17) ist.

## Revendications

1. Siège enfant pour véhicules automobiles comprenant un ensemble de sangles (2, 3, 4, 5, 6, 7) pour retenir un enfant et un appui-tête ajustable en hauteur (8), et a une structure qui permet aux sangles (2, 3, 4, 5, 6, 7) d'être dissimulées lorsqu'elles ne sont pas utilisées, et comprenant un moyen lié au mécanisme par le biais duquel la personne agit pour déplacer l'appui-tête (8), **caractérisé en ce que** le moyens lié au mécanisme par le biais duquel la personne agit pour déplacer l'appui-tête (8) comprend un dispositif de verrouillage (14) et a, sur la partie avant du dossier (24) du siège enfant (1), un élément de retenue (9) adapté pour retenir les sangles (2, 3) dans la position passive, **en ce que** le siège enfant (1) comprend en outre :
un élément coulissant (18) pour une ceinture à cinq points lorsque l'enfant est petit, et un autre élément coulissant (19) pour déplacer l'appui-tête lorsque l'enfant a grandi, ces éléments coulissants (18, 19) étant indépendants l'un de l'autre, et ces deux éléments coulissants (18, 19) étant guidés par un guide vertical (17) dans le châssis (16) du siège enfant (1).

2. Siège enfant pour véhicules automobiles selon la revendication 1, **caractérisé en ce que** le dispositif de verrouillage (14) a au moins un élément de verrouillage (14a, 14b) relié à l'élément de retenue de sangles (19), de sorte que lorsque les sangles (2, 3) sont placées entre l'élément de retenue (9) et l'élément de verrouillage (14a, 14b), ces sangles (2, 3) appuient contre l'élément de verrouillage (14a, 14b) qui agit sur l'élément coulissant de déplacement (19) de l'appui-tête (8) lorsque l'enfant est petit et le bloque, et en même temps cet élément de verrouillage (14a, 14b) agit pour déverrouiller l'élément coulissant de déplacement (19) de l'appui-tête (8) lorsque l'enfant a grandi, le dispositif de verrouillage (14a, 14b) ayant deux éléments différents et indépendants (14a, 14b), un pour chaque sangle (2, 3) fixé sur l'élément de retenue de sangle (9).

3. Siège enfant pour véhicules automobiles selon la revendication 2, **caractérisé en ce que** chaque élément de verrouillage (14a, 14b) comprend son propre axe d'inclinaison (30) de sorte qu'il peut adopter deux positions différentes et son élément élastique (32a, 32b) respectif pour revenir dans la position de repos, et avec une ou plusieurs languettes (33a, 33b) adaptées pour verrouiller ou déverrouiller l'élément coulissant de déplacement de l'appui-tête (8).

4. Siège enfant pour véhicules automobiles selon la revendication 1, **caractérisé en ce que** le guide vertical (17) est un guide vertical (17) central.
